**Europäisches Patentamt**

**European Patent Office**

**Office européen des brevets**

(19)

(11) Veröffentlichungsnummer: **0 094 689**

**B1**

(12) # EUROPÄISCHE PATENTSCHRIFT

(45) Veröffentlichungstag der Patentschrift:
04.02.87

(21) Anmeldenummer: **83104916.8**

(22) Anmeldetag: **18.05.83**

(51) Int. Cl.⁴: **B 60 T 11/04, F 16 D 65/52**

(54) Hydraulische Anhängerbremse.

(30) Priorität: **18.05.82 DE 3218772**

(43) Veröffentlichungstag der Anmeldung:
**23.11.83 Patentblatt 83/47**

(45) Bekanntmachung des Hinweises auf die Patenterteilung:
**04.02.87 Patentblatt 87/6**

(84) Benannte Vertragsstaaten:
**AT BE CH DE FR GB IT LI NL SE**

(56) Entgegenhaltungen:
**EP-A-0 026 306**
**DE-C-475 712**
**DE-C-924 367**
**US-A-3 762 511**

(73) Patentinhaber: **Johann Gassner K.G., Post Grosshelfendorf, D-8011 Göggenhofen (DE)**

(72) Erfinder: **Gassner jun., Johann, Haus Nr. 10, D-8011 Göggenhofen (DE)**

(74) Vertreter: **Lamprecht, Helmut, Dipl.- Ing., Corneliusstrasse 42, D-8000 München 5 (DE)**

LIBER, STOCKHOLM 1987

EP 0 094 689 B1

## Beschreibung

Die Erfindung betrifft eine hydraulische Anhängerbremse, insbesondere für schleppergezogene land- und forstwirtschaftliche Anhänger mit einem einseitig wirkenden hydraulischen Bremszylinder, von dessen beiden relativ zueinander beweglichen Elementen, dem Zylindergehäuse und dem Kolben, ein erstes Element an einem Bremsgestänge und das zweite Element an einer ortsfesten Basis am Anhänger angreift, und von welchen der Kolben durch den mittels eines Bremsventils abbaubaren Druck einer hydraulischen Druckquelle entgegen der Kraft einer Bremsfeder in seine Lösestellung bewegbar ist.

Eine derartige Anhängerbremse ist aus der europäischen Patentanmeldung mit der Veröffentlichungsnummer 0026306 bekannt. Sie verbindet große Betriebssicherheit mit einem minimalen Anspruch an Wartung und Pflege, wobei auch bei abgekuppeltem Anhänger bei beliebig häufiger Wiederholung des Bremsvorgangs eine zuverlässige Abbremsung des Anhängers gewährleistet ist.

Im rauhen land- und forstwirtschaftlichen Betrieb ist eine derartige Bremse besonders erwünscht, weil mit einer regelmäßigen, sorgfältigen Wartung und Pflege der Bremsanlage nicht gerechnet werden kann. Wegen der nicht immer gewährleisteten Wartung stellt sich deshalb die Aufgabe, die erwähnte Bremse noch weiter dadurch zu verbessern, daß zum Ausgleich der Abnützung des Bremsbelags eine selbsttätige Nachstellung der Bremse erfolgt, damit eine kurze Ansprechzeit der Bremse auch nach entsprechender Abnützung des Bremsbelags erhalten bleibt. Dabei soll die Konstruktion ihren einfachen und zuverlässigen Aufbau behalten und we3terhin zum nachträglichen Einbau geeignet sein. Außerdem soll die Möglichkeit bestehen, zusätzlich eine Umstellmöglichkeit für die Bremskraft zur Anpassung an die Belastung bzw. Beladung des Anhängers vorzusehen.

Die Lösung dieser Aufgabe besteht darin, daß am ersten Element ein erstes Sperrstück einer einseitig wirkenden, mit mehreren in Richtung der Bewegungsbahn des ersten Elements aufeinanderfolgenden Sperrpositionen versehenen Sperrvorrichtung angeordnet ist, das in Richtung der beim Lösen der Bremse vom ersten Element ausgeführten Bewegung an einem zweiten, an der ortsfesten Basis angeordneten Sperrstück der Sperrvorrichtung abstützbar ist, daß die Sperrstücke sich in einer für den Übergang in die jeweils nächste Sperrposition geeigneten Übergangsposition befinden, wenn das erste Element von seiner Lösestellung einen dem minimalen Bremshub bei neuem Bremsbelag zuzüglich einer Hubverlängerung bei einer vorgegebenen Abnützung des Bremsbelags entsprechenden Abstand in Richtung auf seine Bremsstellung aufweist, daß in dieser Übergangsstellung zwischen dem zweiten Sperrstück und dem ersten Element in Richtung auf die Lösestellung des ersten Elements ein Spiel besteht, welches etwa dem Bremshub bei neuem Bremsbelag entspricht, und daß das zweite Element in Richtung der beim Bremsen auf dieses zweite Element wirkenden Kraft der Bremsfeder an der ortsfesten Basis über ein einseitig wirkendes Kupplungselement abgestützt ist.

Überschreitet die Abnützung des Bremsbelags das vorgegebene, zweckmäßigerweise einstellbare Ausmaß, so findet ein übermäßig großer Bremshub des ersten Elements gegenüber dem zweiten Element statt, das während des Bremsvorgangs an der ortsfesten Basis anliegt. Dadurch wird die Bewegung des ersten Elements das erste Sperrstück in die Übergangsposition gegenüber dem zweiten Sperrstück bewegen, so daß entweder, je nach Ausführungsform, durch die Schwerkraft, durch die Wirkung einer Stellfeder oder durch ein anderes geeignetes Stellorgan, oder aber durch die beim Lösen der Bremse stattfindende Bewegung des ersten Sperrorgans die beiden Sperrstücke eine neue Sperrposition einnehmen, welche den Rückweg des ersten Elements um den Abstand zwischen erster und zweiter Sperrposition verkürzt. Die durch die Rückstellfeder der Bremse bewirkte Bewegung des ersten Elements des Bremszylinders in die Lösestellung wird somit vorzeitig beendet, so daß der restliche Weg der Lösebewegung vom zweiten Element in entgegengesetzter Richtung zurückgelegt wird, welches dadurch seine Position gegenüber dem einseitig wirkenden Kupplungselement entsprechend verändert und unter der Wirkung des einseitig wirkenden Kupplungselements beim nächsten Bremsvorgang in der dann erreichten Position verbleibt. Dieser Positionsänderung des zweiten Elementi entspricht die Nachstellung der Bremse.

Eine vorteilhafte Ausgestaltung besteht darin, daß das zweite Element über eine Stützfeder auf die ortsfeste Basis abgestützt ist und daß die maximale Kraft der Stützfeder einstellbar ist, wodurch zur Anpassung der Bremskraft an die Belastung des Fahrzeugs die Kraft der Bremsfeder mehr oder weniger kompensiert werden kann.

Eine andere vorteilhafte Ausgestaltung besteht darin, daß die Sperrvorrichtung als Rasten-Gesperre ausgebildet ist, wobei der Rastenabstand dem zusätzlichen Bremshub aufgrund einer vorgegebenen Abnützung des Bremsbelags entspricht.

Weitere vorteilhafte Ausgestaltungen ergeben sich aus den Unteransprüchen in Verbindung mit der Beschreibung.

Anhand der nun folgenden Beschreibung der in der Zeichnung dargestellten Ausführungsbeispiele der Erfindung wird diese näher erläutert.

Es zeigt:

Fig. 1 eine schematische Seitenansicht einer ersten Ausführungsform der erfindungsgemäßen hydraulischen Anhängerbremse in Bremsstellung,

Fig. 2 eine der Fig. 1 entsprechende Seitenansicht mit geschnittener Bremsfeder,

Fig. 3 einen Schnitt durch die Sperrvorrichtung für das erste Element des Bremszylinders und das Kupplungselement für das zweite Element des Bremszylinders im Bereich der ortsfesten Basis bei der Ausführungsform nach den Fig. 1 und 2,

Fig. 4 eine Ansicht des in Fig. 3 gezeigten Details in Richtung des Pfeils IV in Fig. 3,

Fig. 5 vier unterschiedliche Positionen bei der Bewegungsübertragung zwischen dem ersten Element des Bremszylinders und der Sperrvorrichtung,

Fig. 6 einen der Fig. 3 ähnlichen Schnitt durch eine zweite Ausführungsform der erfindungsgemäßen Bremse,

Fig. 7 eine Ansicht von oben in Richtung des Pfeils VII in Fig. 6 auf das dort gezeigte Kupplungselement,

Fig. 8 eine Ansicht in Richtung des Pfeils VIII in Fig. 7,

Fig. 9 eine den Fig. 3 und 6 ähnliche Schnittdarstellung einer dritten Ausführungsform der erfindungsgemäßen Bremse mit einem Abschnitt des gegenüber den Rädern abgefederten Bereichs des Anhängers,

Fig. 10 eine Ansicht in Richtung des Pfeils X in Fig. 9 ähnlich Fig. 4,

Fig. 11 einen den Fig. 3, 6 und 9 ähnlichen Schnitt durch eine vierte Ausführungsform der erfindungsgemäßen Bremse,

Fig. 12 eine Detailvariante zu Fig. 9,

Fig. 13 eine Ansicht in Pfeilrichtung XIII in Fig. 12.

Fig. 14 eine Variante zu Fig. 3.

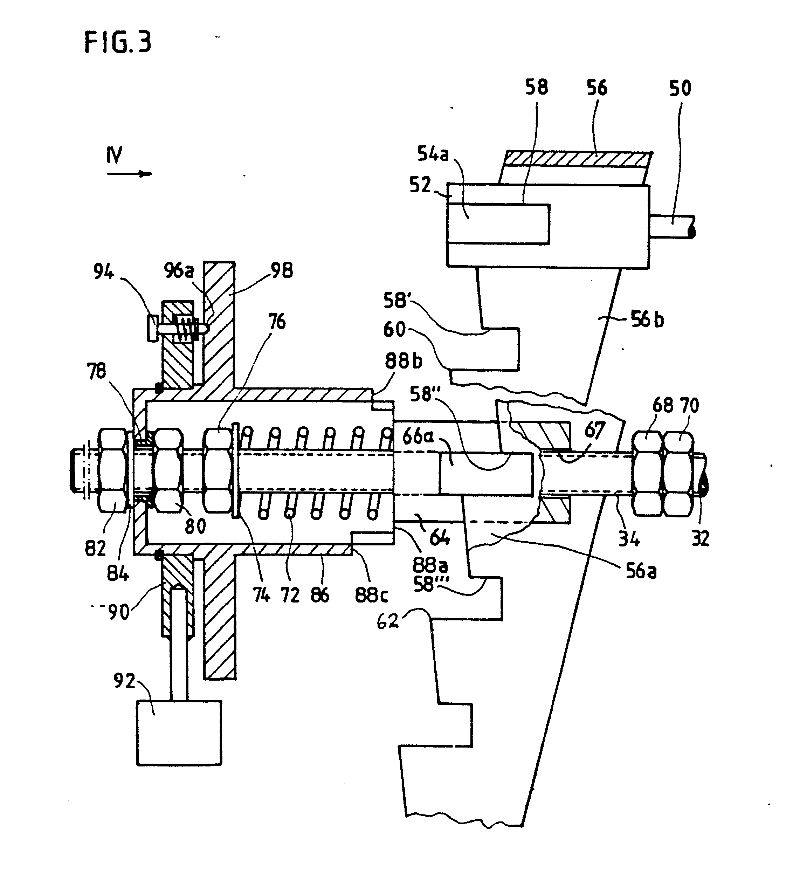

In den Figuren bezeichnet 10 die Achse eines land- oder forstwirtschaftlichen Anhängers, an welcher eine Basis 12 für eine Bremsvorrichtung mittels einer Klemmvorrichtung 14 befestigt ist. Von der Achse 10 werden Lager 16 für eine Bremswelle 18 getragen, mit welcher drehfest ein Bremshebel 20 verbunden ist, dessen eines Ende 22 mit einem Bremsgestänge 24 und dessen anderes Ende 26 mit dem Gehäuse 25 eines einfachwirkenden hydraulischen Bremszylinders 30 verbunden ist. Ein im Inneren des Zylindergehäuses 28 angeordneter Kolben ist mit einer Kolbenstange 32 verbunden, die an dem vom Bremshebel 20 abgewandten Ende aus dem Zylindergehäuse 25 ragt und mit einem Außengewinde 34 versehen ist, welches in Fig. 3 zu sehen ist. Auf der von der Kolbenstange 32 abgewandten Seite des Kolbens mündet in das Zylindergehäuse 28 eine Leitung 36, mit welcher von einer Druckquelle aus unter Druck stehendes hydraulisches Strömungsmittel in den Bremszylinder 30 eingeleitet werden kann. Ein in der Leitung 36 angeordnetes, hier nicht dargestelltes Bremsventil ermöglicht es, den Druck in der Leitung 36 abzusenken.

Das dem Bremshebel 20 benachbarte Ende des Zylindergehäuses 25 ist an seiner Außenseite mit einem Gewindeprofil 35 versehen und ein entsprechendes Profil 40 befindet sich auch am Umfang einer Mutter 42, die verstellbar auf der Kolbenstange 32 angeordnet ist. In diese beiden Gewindeprofile 35 und 40 greifen die Enden einer als Schraubenzugfeder ausgebildeten Bremsfeder 44 ein, die also bestrebt ist, die Kolbenstange 32 in das Zylindergehäuse 25 zu ziehen, während durch den auf den Kolben auf der von der Kolbenstange 32 abgewandten Seite wirkenden Hydraulikdruck die Bremsfeder gespannt wird, bis sich ein Kräftegleichgewicht einstellt. Der einem vorgegebenen maximalen Hydraulikdruck entsprechende Gleichgewichtszustand, bei welchem die Bremsfeder 44 gespannt ist, entspricht der Lösestellung der Bremse, so daß also die Bremswirkung durch Absenkung des Hydraulikdrucks und damit durch die Kraft der Bremsfeder 44 erzielt wird.

An dem an den Bremshebel 20 angeschlossenen Ende des Zylindergehäuses 25 ist ein Mitnehmerzapfen 46 angeordnet, welcher in ein Langloch 48 am Ende eines über dem Bremszylinder 30 angeordneten, stabförmigen Ankers 50 eingreift.

Das Bremsgestänge 24 wirkt in bekannter Weise auf eine Backenbremse, bei welcher in Bremsstellung Bremsbacken entgegen der Kraft einer Rückstellfeder gegen eine mit dem Rad umlaufende Bremsfläche gedrückt werden, wobei als Verschleißteile auswechselbare Bremsbeläge vorhanden sind. Bei neuen Bremsbelägen ist der bei einem Bremsvorgang auftretende Bremshub und damit die Ansprechzeit der Bremse gering. Mit zunehmender Abnützung der Bremsbeläge wird der Bremshub aus einer vorgegebenen Lösestellung größer. Es ist deshalb erforderlich, von Zeit zu Zeit die Bremse nachzustellen, um den Bremshub wieder auf das Maß zurückzuführen, das bei neuen Bremsbelägen vorhanden ist.

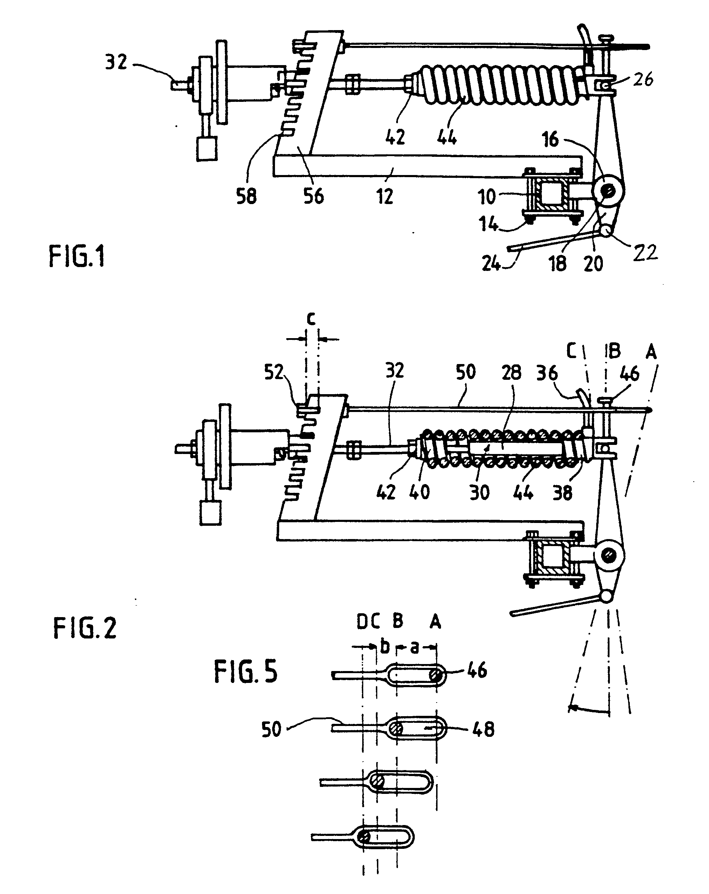

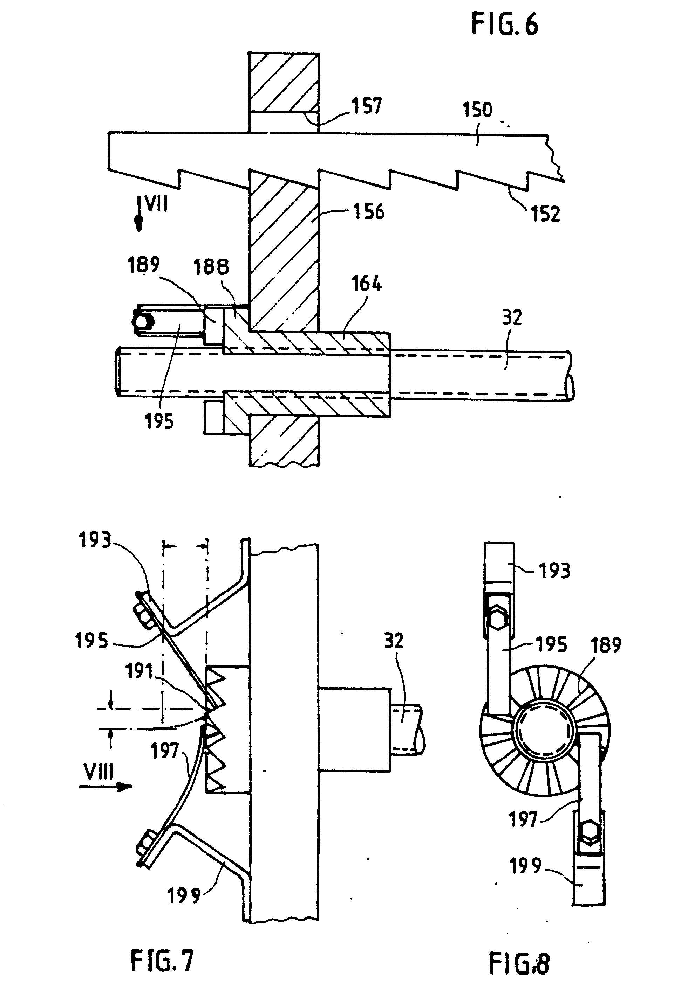

In den Figuren 1 und 2 ist der Bremszylinder 30 in der Bremsstellung bei neuen Bremsbelägen gezeigt. Zur Ausübung der erforderlichen Bremskraft hat sich die Bremsfeder 44 stark zusammengezogen. Das Langloch 45 im Anker 50 besitzt eine solche Länge, daß der Mitnehmerzapfen 46 in diesem Langloch 45 eine Bewegung ausführen kann, welche dem Bremshub bei neuen Bremsbelägen entspricht, ohne daß dadurch die Lage des Ankers 50 durch den Mitnehmerzapfen 46 verändert wird. In Fig. 5 ist die vom Mitnehmerzapfen 46 bei gelöster Bremse eingenommene Stellung mit A bezeichnet. Bei neuen Bremsbelägen legt der Mitnehmerzapfen 46 beim Bremsvorgang den Weg a zurück und gelangt in die Position B. Wenn sich der Bremsbelag abgenützt hat, wird der Bremshub länger und der Mitnehmerzapfen 46 überschreitet die Position B in Richtung auf die Position C. Bei der ohne Nachstellung maximal für zulässig erachteten Abnützung des Bremsbelags erfolgt ein zusätzlicher Bremshub b und der Mitnehmerzapfen erreicht die Position C.

Sollte der Mitnehmerzapfen beim Bremsvorgang die Position C in Richtung auf die Position D überschreiten, muß die Bremse nachgestellt werden.

Zu diesem Zweck ist bei der in den Fig. 1 - 4 gezeigten Ausführungsform der Anker 50 an seinem vom Langloch 45 abgewandten Ende mit einem Sperrstück 52 versehen, welches - wie aus Fig. 3 ersichtlich ist - aus einem zylinderischen Körper mit seitlichen, einander diametral gegenüberliegenden Riegelansätzen 54a und 54b besteht. Das Sperrstück 52 befindet sich im Bereich eines fest mit der Basis 12 verbundenen, etwa U-förmigen Bügels 56, der als zweites Sperrstück dem ersten Sperrstück 52 zugeordnet ist und mit diesem eine Sperrvorrichtung bildet. Die beiden zueinander parallelen Schenkel 56a und 56b des Bügels 56 steigen schräg nach oben an und nähern sich dabei dem mit dem Langloch versehenen Ende des Ankers 50. Die beiden Schenkel 56a und 56b umgreifen den zylindrischen Körper des ersten Sperrstücks 52, während zur Aufnahme der Riegelansätze 54a und 54b auf der vom Langloch 45 abgewandten Seite der Schenkel 56a und 56b deckungsgleiche Rastkerben 55 vorgesehen sind, die in den Fig. 1 und 2 nur schematisch angedeutet sind und deren genaue Form und Anordnung sich deutlicher aus Fig. 3 ergibt.

In Fig. 2 ist zu sehen, daß die Rastkerben 55 in der Bewegungsrichtung des Ankers 50 eine Tiefe c aufweigen, die sich aus den beiden Abschnitten d und e zusammensetzt, wobei d das Maß ist, um das die einzelnen Rastkerben 55 in der Bewegungsrichtung des Ankers 50 gegeneinander versetzt sind. Das Maß e ergibt sich dann als Differenz e = c - d. Das Maß c entspricht dem Abstand b zwischen den Positionen B und C (Fig. 5), d.h. demjenigen zusätzlichen Bremshub, der sich als Folge der Abnützung der Bremsbeläge ergibt und der gerade noch ohne Nachstellung der Bremse für zulässig erachtet wird. Solange dieser Bremshub von Position A nach Position C nicht überschritten wird, wird der Bremshub a von Position A nach Position B vom Langloch 45 und der zusätzliche Bremshub von Position B nach Position C von der Bewegung des ersten Sperrstücks 52 in der jeweils von ihm besezten Rastkerbe 55 aufgenommen. Überschreitet der Bremshub die Position C, gleiten die beiden Riegelansätze 54a und 54b aus der Rastkerbe 55 und das erste Sperrstück 52 fällt unter dem Einfluß der Schwerkraft nach unten, bis es auf den unteren Rand 60 der darunter befindlichen Rastkerbe 55' auftrifft. Damit diese Bewegung, welche auch unter dem Einfluß einer Feder stattfinden kann, nicht behindert wird, weicht die Kante 62 der Schenkel 56a und 56b, in welche die Rastkerben 55 bzw. 55' ausmünden, entgegen dem schrägen anstieg des Bügels 56 aus der vertikalen Richtung zurück.

Wenn nun die Bremse wieder gelöst wird, indem im Bremszylinder 30 wieder ein Hydraulikdruck aufgebaut wird, der die Bremsfeder 44 spreizt, wird unter der Wirkung der Rückstellfeder der Bremse der Bremshebel 20 in Fig. 2 im Uhrzeigersinn.verschwenkt, der Anker 50 wird mitgenommen, nachdem der Mitnehmerzapfen 46 eine Strecke zurückgelegt hat, die dem Abstand a der Positionen A und B entspricht, wodurch er das Langloch 45 von links nach rechts (Fig. 5) durchquert hat. Durch die Mitnahme des Ankers 50 wird das erste Sperrstück 52 bis zum Anschlag der beiden Riegelansätze 54a und 54b in die Rastkerbe 55' gezogen, worauf die Bewegung des Ankers 50 nach rechts gesperrt ist. Wie deutlich aus Fig. 3 ersichtlich ist und sich aus dem Vergleich der Wegstrecken a + b beim Bremshub und a + b - d beim Lösen der Bremse ergibt, wird das Zylindergehäuse 25 beim Lösen der Bremse und nach einem Übergang des Sperrstücks 52 von der Rastkerbe 55 in die Rastkerbe 55' daran gehindert, in die Ausgangsposition zurückzukehren, die es vor dem Bremsvorgang eingenommen hat. Da der Druck im Bremszylinder 30 wieder bis auf den gleichen Lösedruck ansteigt und diesem Lösedruck stets der gleiche Federweg der Bremsfeder 44 entspricht, wird deshalb die Kolbenstange 32 in den Fig. 1, 2 und 3 nach links um das Maß d verschoben.

Im Bereich des Bügels 56 trägt die Kolbenstange 32 ein Kupplungsstück 64, welches ähnlich ausgebildet ist wie das erste Sperrstück 52 der Sperrvorrichtung 52, 54, d.h. das Kupplungsstück 64 besitzt einen zylindrischen Körper mit seitlichen Riegelansätzen 66a und 66b, welche sich diametral gegenüberliegen und die wie die Riegelansätze 54a und 54b zum Eingriff in die Rastkerben 58 bzw. 58' geeignet sind. In Fig. 3 greifen diese Riegelansätze 66a und 66b in eine Rastkerbe 58'' ein. Das Kupplungsstück 64 besitzt eine Durchgangsbohrung 67, so daß sich die Kolbenstange 32 frei innerhalb des Kupplungsstücks 64 verschieben kann. Auf der Kolbenstange 32 sitzt als einstellbarer Mitnehmer für das Kupplungsstück 64 eine Mutter 68 und eine ihr zugeordnete Kontermutter 70. Bei gelöster Bremse liegt die Mutter 68 an der ihr zugewandten Stirnfläche des Kupplungsstücks 64 an, wobei die der Mutter 68 zugewandte Stirnfläche der Riegelansätze 66a und 66b einen Abstand vom zugeordneten Ende der Rastkerbe 58'' aufweist, der etwas größer ist als das oben erwähnte Maß c, so daß also der Abstand dieser Stirnfläche der Riegelansätze 66a und 66b vom offenen Rand der Rastkerbe 58'' etwas kleiner ist als das oben erwähnte Maß c. Durch den erwähnten Abstand von dem zugeordneten Ende der Rastkerbe 58'' ist ein Freiweg für die Bremse geschaffen, d.h. dieser Abstand muß bei Betätigung der Bremse zunächst überwunden werden, bevor in der nachfolgend noch näher erläuterten Weise das Kupplungsstück 64 als Widerlager für den Bremszylinder 30 wirksam werden kann und damit die Bremsfeder 44 den Bremshebel 20 verschwenken kann.

Die Kolbenstange 32 ist auf der vom Bremszylinder 30 abgewandten Seite aus dem Kupplungsstück 64 herausgeführt und wird dort von einer als Schraubendruckfeder ausgebildeten Stützfeder 72 umschlossen, die sich mit einem Ende am Kupplungsstück 64 und mit dem anderen Ende über eine Scheibe 74 auf eine Mutter 76 abstützt, mit welcher die Kraft der Feder 72 einstellbar ist. Eine Lagerbuchse 78 mit einer Durchgangsbohrung für die Kolbenstange 32 kann durch zwei Muttern 80 und 82 und eine Unterlegscheibe 84 in ihrer Position längs der Kolbenstange 32 festgelegt werden. Sie dient zur Lagerung einer Hülse 86, welche die Feder 72 umgibt und an ihrem dem Kupplungsstück 64 zugewandten, offenen Ende einen in axialer Richtung abgestuften Rand 88 besitzt, welcher im Durchmesser so bemessen ist, daß er sich außerhalb des zylindrischen Körpers des Kupplungsstücks 64 gegen die ihm zugewandten Stirnflächen der Riegelabschnitte 66a und 66b legen kann. Beim gezeigten Beispiel ist der Umfang des Randes 88 in drei gleichmäßig gegeneinander abgestufte Abschnitte 88a, 88b und 88c von jeweils 120 unterteilt. Damit sich bei entsprechender Winkelstellung jeder der Abschnitte 88a - 88c an einen der Riegelabschnitte 66a oder 66b anlegen kann, muß der andere Riegelabschnitt entsprechend der doppelten Abstufung verkürzt sein, wie dies in Fig. 3 für den sichtbaren Riegelabschnitt 66a gezeigt ist. Es können aber auch jeweils einander diametral gegenüberliegende Abschnitte von jeweils 60 die gleiche Abstufung aufweisen, wodurch es dann möglich ist, den Umfangsrand 88 bzw. jeweils ein Paar seiner abgestuften Abschnitte gegen beide Riegelabschnitte 66a und 66b zu legen.

In Fig. 3 ist eine Einstellung gezeigt, bei welcher der Abschnitt 88a am Kupplungsstück 64 anliegt, wobei dieser Abschnitt 88a der größten axialen Länge der Hülse 86 entspricht. Es ist ersichtlich, daß bei dieser Einstellung bei einem in Fig. 3 nach rechts gerichteten Zug der Kolbenstange 32, wie dieser beim Bremsvorgang auftritt, die Feder 72 ihre geringste Stützkraft ausüben wird. Wird die Hülse um 120 gedreht und der Abschnitt 88b gegenüber dem Riegelabschnitt 66b ausgerichtet, ergibt sich eine größere Stützkraft, und die maximale Stützkraft wird erreicht, wenn die Hülse 86 nochmals um 120 gedreht wird, so daß der Abschnitt 88c mit dem Riegelabschnitt 66b zusammenwirkt.

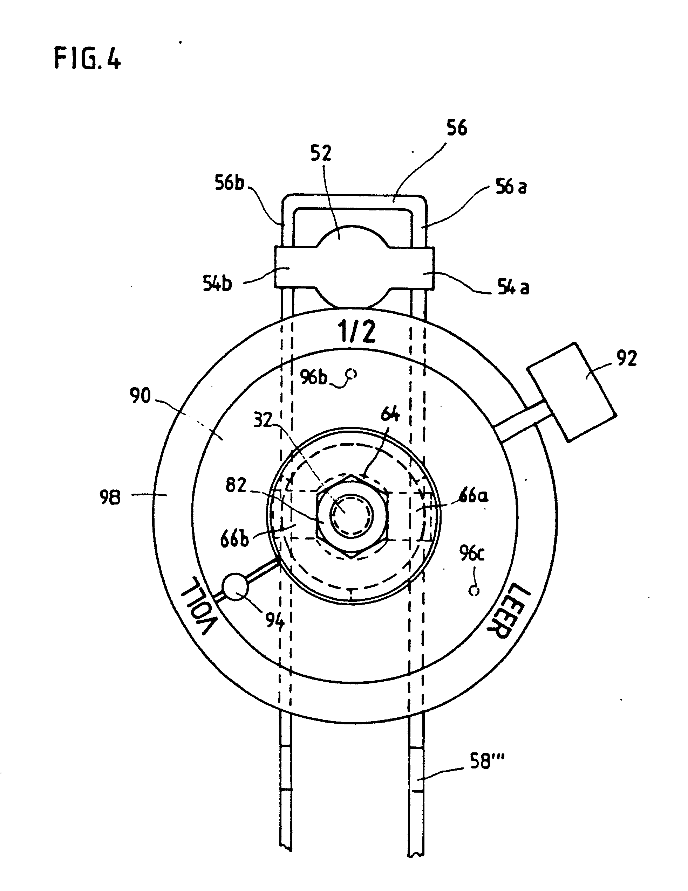

Da die Kraft der Stützfeder 72 beim Bremsvorgang der Kraft der Bremsfeder 44 entgegengesetzt gerichtet ist, schwächt sie die Bremsfederwirkung, so daß sich damit die Bremskraft unterschiedlichen Belastungen des Fahrzeugs anpassen läßt. Wie aus Fig. 4 ersichtlich ist, dienen die drei Abschnitte 88a - 88c der Anpassung an die Belastungszustände VOLL, 1/2 und LEER.

Im gebremsten Zustand des Fahrzeugs wird die Hülse 86 mit der Bremskraft gegen das Kupplungsstück 64 gedrückt, so daß es nicht möglich ist, die Hülse 86 zu verdrehen. Da die Einstellung der Bremse aber vorgenommen wird, wenn der Anhänger abgestellt ist oder das Gespann aus Zugfahrzeug und Anhänger steht, wobei in beiden Fällen die Bremse in Bremsstellung ist, ist eine Vorwahlvorrichtung vorgesehen, die es ermöglicht, im gebremsten Zustand die Bremskraft vorzuwählen, wobei die Umstellung auf die gewählte Bremskraft nach dem Lösen der Bremse automatisch stattfindet.

Zu diesem Zweck ist auf der Hülse 86 eine Wählscheibe 90 gelagert, die durch ein exzentrisches Gewicht 92 belastet ist und über eine federnde Rasteinrichtung 94 mit Rastkerben 96a, 96b oder 96c in Eingriff bringbar ist, die sich in einem fest mit der Hülse 86 verbundenen Flansch 98 befinden und um 120° gegeneinander versetzt sind.

Wird die Vorwählscheibe auf eine Belastung eingestellt, welche nicht der gegebenen Position der Abschnitte 88a - 88c entspricht, so befindet sich das Gewicht entweder rechts oder links um 120 aus seiner unteren Mittelstellung, d.h. seiner tiefsten Schwerpunktslage. Sobald die Bremse gelöst wird, wird die Reibungsverbindung zwischen der Hülse 86 und dem Kupplungsstück 86 aufgehoben und das Gewicht 92 kann sich in seine tiefste Schwerpunktslage bewegen, wobei es eine Drehung um 120 ausführt und über die Rastverbindung 94, 96a, b, c die Hülse 86 mitnimmt.

Wie erwähnt, wird beim Bremsvorgang zunächst der Freiweg überwunden, der zwischen dem Kupplungsstück 86 und dem Anschlagende der Rastkerbe 58 besteht, dabei hebt sich die Mutter 68 vom Kupplungsstück 64 ab. Beim Lösen der Bremse legt die Kolbenstange den gleichen Weg in entgegengesetzter Richtung zurück, so daß die Mutter 68 das Kupplungsstück wieder so weit nach links schiebt, daß der vorgewählte Freiweg wieder vorhanden ist. Wenn aber - wie oben beschrieben - das Sperrstück 52 von der Rastkerbe 58 in die Rastkerbe 58' abgefallen ist, erfährt die Kolbenstange beim Lösen der Bremse noch eine zusätzliche Bewegung nach links, nämlich um das Maß d, so daß nun die Riegelabschnitte 66a und 66b aus der Rastkerbe 58'' gedrückt werden und somit auch das Kupplungsstück 64 bis zur darunter liegenden Rastkerbe 58''' fällt, so daß beim nächsten Bremsvorgang die Bremse um das Maß d, nämlich den in Längsrichtung der Kolbenstange 32 gemessenen Abstand der Riegelkerben 58'' und 58''' nachgestellt ist. Wenn der Bremsbelag erneut eine Abnützung aufweist, die das Maß b überschreitet, wiederholt sich der Vorgang, bis die Riegelkerben 58, 58', 58'', 58''''... erschöpft sind, was optisch leicht wahrnehmbar ist und somit anzeigt, wann die Bremsbeläge erneuert werden müssen.

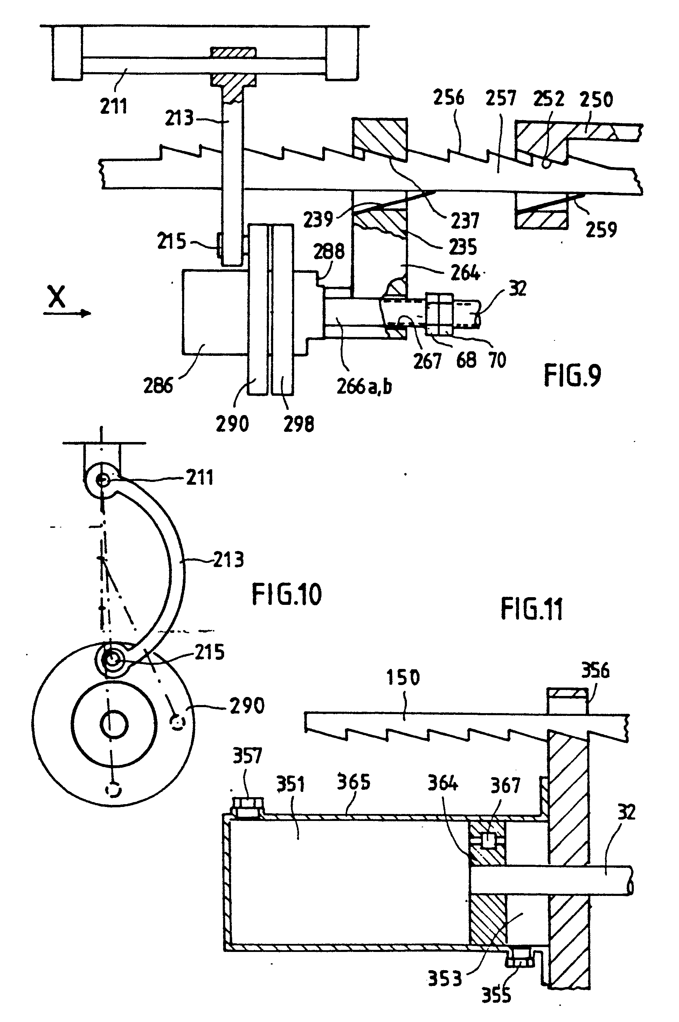

Bei dem in Fig. 6 dargestellten Beispiel ist der dem Anker 50 entsprechende Anker 150 mit einer Sägeverzahnung 152 versehen, der an einem mit der Basis 12 verbundenen Widerlager 156 eine entsprechend abgeschrägte Öffnung 157 zugeordnet ist. Die Zahnlänge der Sägeverzahnung 152 entspricht dem oben erwähnten Maß b, so daß der Anker 150 jeweils eine neue Sperrstellung einnimmt, wenn das als zulässig erachtete Maß der Abnützung des Bremsbelags erreicht ist. Da entsprechend der obigen Erläuterung beim Lösen der Bremse die Kolbenstange 32 eine dem Maß der Nachstellung des Ankers 150 entsprechende zusätzliche Bewegung in Fig. 6 nach links ausführen wird, wird eine, auf der Kolbenstange 32 befindliche, in Bremsstellung mit einem Flansch 188 an dem Widerlager 156 anliegende Mutter 164 nach links verschoben. Die vom Widerlager 156 abgewandte Seite des Flansches 188 ist mit einer Sperrverzahnung 189 versehen, wobei in Bremsstellung an der Sperrflanke 191 eines der Zähne eine schräg gegen das Widerlager 156 verlaufende, auf einem Bock 193 abgestützte Feder 195 anliegt. Eine in gleicher Stützrichtung angeordnete Hemmfeder 197 ist an einem Bock 199 angebracht und liegt nicht sperrend auf einem Zahn auf, wie deutlich aus Fig. 8 ersichtlich ist. Durch das Verschieben der Mutter 164 wird das freie Ende der Feder 195 auf einem Bogen bewegt und gegen die Sperrflanke 191 gedrückt, wobei ein Drehmoment auf die Mutter ausgeübt wird, die sich dadurch gegenüber der Kolbenstange 32 in Richtung auf den Bremszylinder 30 verstellt. Durch die Drehung der Mutter 164 fällt die Hemmfeder 197 in die Sperrverzahnung 189 ein und hindert die Mutter 164 daran, sich zurückzudrehen, so daß beim nächsten Bremsvorgang die Bremse um das Maß nachgestellt ist, um das sich die Mutter 164 auf der Kolbenstange 32 verstellt hat. Um die erwünschte Nachstellung zu erreichen, sind eine Anzahl von Bremsvorgängen erforderlich.

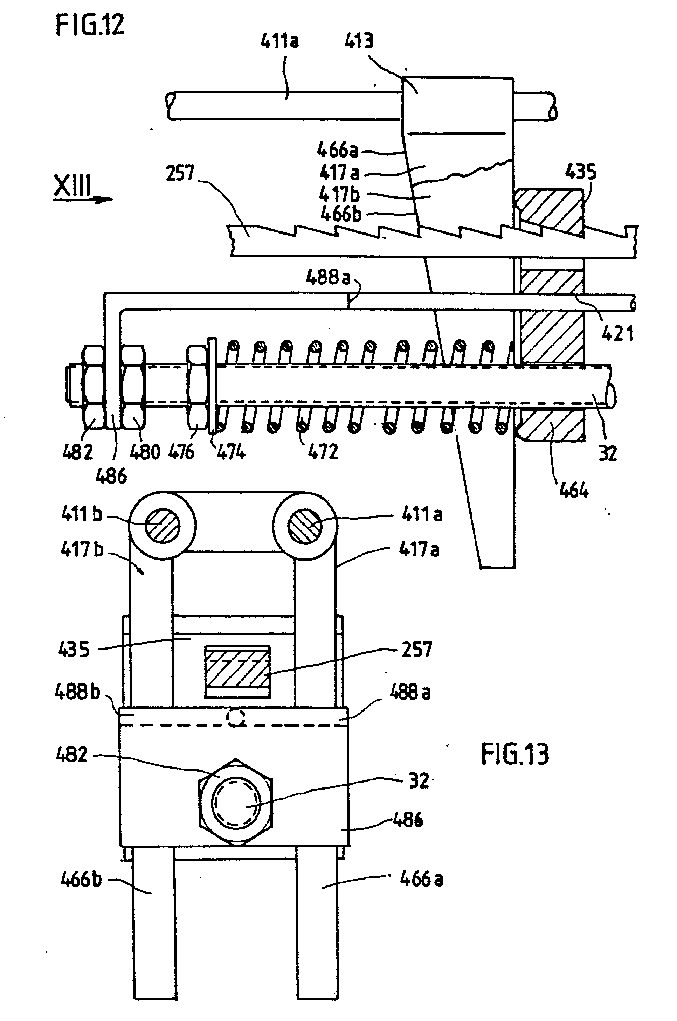

Bei der Ausführungsform nach den Fig. 9 und 10 ist eine nach oben weisende Sägeverzahnung 256 auf einem mit der Basis 12 verbundenen Schiene 257 ausgebildet. Der Anker 250 ist mit einer schrägen Flanke 252 versehen, welche durch eine Feder 259 oder durch die Schwerkraft in die Sägeverzahnung 256 gedrückt werden kann. Die Zahnlänge entspricht wieder dem für zulässig erachteten Verschleiß der Bremsbacken. Die Kolbenstange 32 ist mit einem Kupplungsstück 264 versehen, das eine Durchgangsbohrung 267 für die Kolbenstange 32 aufweist, sowie seitliche Ansätze 266a und 266b, die sich diametral gegenüberliegen und die gleiche Funktion hinsichtlich der Abstützung einer Hülse 286 ausüben, wie die Riegelansätze 66a und 66b in Fig. 3 hinsichtlich der Hülse 86. Zur Mitnahme des Kupplungsstücks 264 ist auf der Kolbenstange 32 die Mutter 68 mit Kontermutter 70 angeordnet. Die Hülse 286 enthält wie beim Beispiel nach Fig. 3 eine Stützfeder, sie ist mit einem abgestuften Rand 288 versehen und besitzt einen mit Rastkerben versehenen Flansch 298, der durch eine Rasteinrichtung drehfest mit einer auf der Hülse 286 drehbar angebrachten Wählscheibe 290 verbindbar ist.

In diesem Fall wird die Wählscheibe 290 nicht von Hand eingestellt, vielmehr ist an dem gegenüber den Rädern des Fahrzeugs und damit gegenüber der Achse 10 abgefederten Teil des Anhängers eine parallel zur Kolbenstange 32 verlaufende Lagerschiene 211 angebracht, auf welcher eine Kurbelstange 213 längsverschieblich gelagert ist, die mit ihrem anderen Ende an einem Exzenterzapfen 215 an der Wählscheibe 290 angreift. Entsprechend der Belastung senkt sich die Lagerschiene 211 und die Wählscheibe 290 wird gedreht, um die Kraft der Bremsfeder 44 einzustellen. Zwischen der Wählscheibe 290 und dem Flansch 298 ist eine nicht dargestellte Federkupplung angeordnet, welche nach der einen oder anderen Seite entsprechend der Vorwahleinstellung der Wählscheibe 290 aus einer Mittelstellung gespannt wird, um nach dem Lösen der Bremse den Flansch 298 in die vorgewählte Position zu drehen. Bei dieser Ausführungsform sind zweckmäßigerweise in der oben erwähnten Weise jeweils zwei einander diametral gegenüberliegende Abschnitte des Randes 288 mit der gleichen Abstufung versehen.

Das Kupplungsstück 264 besitzt einen nach oben zur Schiene 257 geführten Arm 235 mit einer schrägen Flanke 237, welcher durch eine Feder 239 oder die Schwerkraft mit der Sägeverzahnung 256 in Eingriff gebracht werden kann. In der bereits erwähnten Weise wird nach der Verstellung des Ankers 250 auch die Kolbenstange 32 um einen entsprechenden Abschnitt weiterbewegt, so daß der Bremszylinder 30 eine der gewünschten Nachstellung entsprechende neue Position einnimmt.

Die Fig. 11 zeigt eine weitere Variante, wobei ein Anker 150 der in Fig. 6 gezeigten Art benutzt wird. Die Kolbenstange 32 ist mit einem Hilfskolben 364 verbunden, der in einem Zylinder 365 verstellbar ist, der seinerseits an einem Widerlager 356 angebracht ist, das fest mit der Basis 12 verbunden ist. Der Kolben 364 enthält ein Rückschlagventil 367, das nur schematisch gezeigt ist und das eine Strömung aus der von der Kolbenstange 32 abgewandten Kammer 351 in die andere Kammer 353 zuläßt, eine Strömung in der Gegenrichtung aber sperrt. Wenn bei der Nachstellung der Bremse die Kolbenstange 32 eine zusätzliche Bewegung nach links erfährt, wird der Kolben nach links verschoben und es strömt Flüssigkeit aus der Kammer 351 in die Kammer 353. Da eine gegenläufige Strömung unterbunden ist, wird der Bremszylinder 30 beim nächsten Bremsvorgang in einer neuen Position abgestützt, die der neuen Stellung des Kolbens 364 entspricht. Ist der Nachstellweg erschöpft, wird die Flüssigkeit aus der Kammer 353 durch eine Ablaßöffnung 355 abgelassen und über eine Einfüllöffnung 357 wieder in die Kammer 351 eingefüllt. Es kann aber auch eine verschließbare Rückführleitung vorgesehen sein.

Bei der Variante nach den Fig. 12 und 13 wird die Schiene 257 mit dem Anker 250 verwendet, wie sie in Fig. 9 gezeigt sind. Der Anker 250 ist in den Fig. 12 und 13 nicht gezeigt, sondern nur der

Arm 435, welcher in seiner Funktion dem Arm 235 in Fig.9 entspricht. Die Lagerschiene 211 in Fig. 9 ist durch zwei parallele Lagerschienen 411a und 411b ersetzt, an welchen längsverschieblich ein Kurvenbügel 413 gelagert ist, der sich mit der normal zu den Lagerschienen 411a und 411b verlaufenden Rückseiten zweier einen Abstand voneinander aufweisender, vertikal nach unten gerichteter Schenkel 417a und 417b gegen den benachbarten Arm 435 legt und bei einer Bewegung des Arms 435 in Fig. 12 nach links von diesem mitgenommen werden kann. Auf der vom Arm 435 abgewandten Seite sind die Schenkel 417a und 417b mit Keilflächen 466a und 466b versehen, die sich nach unten den Rückseiten nähern.

Eine Stützfeder 472 stützt sich einerseits am Arm 435 und andererseits über eine Scheibe 474 auf eine Mutter 476 ab. Ein Anschlagbügel 486 ist durch zwei Muttern 480 und 482 auf der Kolbenstange 32 justiert und mit einem zur Kolbenstange 32 parallelen Arm in einer Bohrung 421 im Arm 435 geführt. Zwei seitliche Anschläge 488a und 488b liegen bei gelöster Bremse mit Abstand den Keilflächen 466a bzw. 466b gegenüber.

Wenn der Bremsvorgang eingeleitet wird, wird die Kolbenstange 32 in Fig. 12 nach rechts gezogen und dabei die Stützfeder 472 gespannt, die der Kraft der Bremsfeder 44 entgegenwirkt. Entsprechend der vertikalen Position des Kurvenbügels 413 wird ein mehr oder weniger langer Federweg zugelassen, bis die Anschläge 488a und 488b an den Keilflächen 466a bzw. 466b anliegen und damit die weitere Bewegung der Kolbenstange 32 nach rechts blockieren. Statt der Keilflächen 466a und 466b können auch entsprechend den Belastungsstufen VOLL, 1/2 und LEER abgestufte Flächen vorgesehen sein.

Das untere, von der Kolbenstange 32 durchquerte Ende des Arms 435 wird wieder als Kupplungselement 464 be zeichnet.

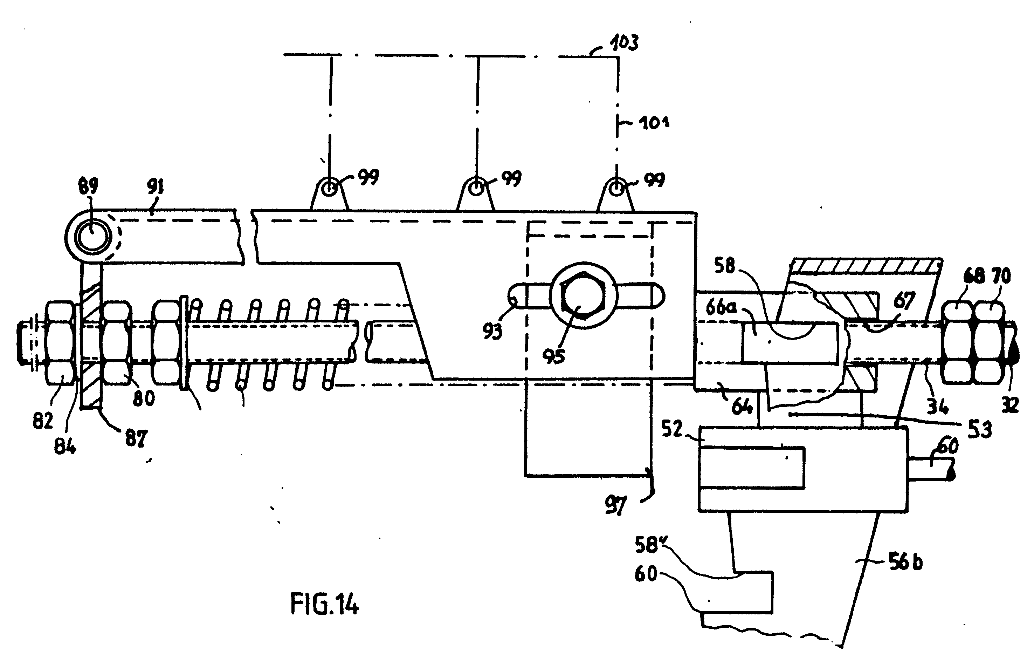

Die Fig. 14 zeigt eine Variante zur Figur 3, wobei zwei Unterschiede beachtlich sind. Einmal ist der Anker 60 unter der Kolbenstange 32 angeordnet und das Sperrstück 52 ist an seiner Oberseite mit einem Auflageklotz 53 für das nun darüber befindliche Kupplungsstück 64. andererseits ist die in Fig. 3 gezeigte Vorwahlvorrichtung vom Ende der Kolüenstange 32 abgenommen, wie sie auf der Hülse 86 montiert ist, und an ihrer Stelle ist ein Lagerelement 87 auf der Kolbenstange 32 festgespannt, daß eine Vorrichtung zur selbsttätigen Anpassung an den Belastungsfall trägt.

Der Auflageklotz 53 verhindert, daß die Bremse ungewollt eine Nachstellung vornimmt, wenn in kaltem Zustand der Öldruck das übliche Maß überschreitet. In diesem Fall könnte es bei der Anordnung nach Fig. 3 geschehen, daß das Kupplungsstück 64 soweit nach links verschoben wird, daß es in die nächsttiefere Stellung fällt. Bei der Anordnung nach Fig. 14 würde das Kupplungsstück 64 durch den Auflageklotz 53 festgehalten und seine Stellung beibehalten. Erst wenn das Sperrstück 52 in die nächstfolgende Position abgefallen ist, kann auch das Kupplungsstück folgen.

Am Lagerelement 87 ist um eine quer zur Richtung der Kolbenstange 32 verlaufende Achse 89 verschwenkbar ein Anschlag 91 verschwenkbar, der einen U-förmigen, nach unten geöffneten Querschnitt besitzt und dessen dem Kupplungsstück 64 zugewandte Stirnseite die Aufgabe des Abschnitts 88a (Fig. 3) erfüllt. Ein in Richtung der Kolbenstange 32 gegenüber dem Anschlag 91 verstellbarer und über ein Langloch 93 an beiden Seiten des Anschlags 91 und eine Klemmschraube 95 feststellbarer zweiter Anschlag 97 übernimmt mit seiner dem Kupplungsstück 64 zugewandten Stirnseite die Aufgabe des Abschnitts 88b (Fig. 3).

An der Oberseite des Anschlags 91 sind in Richtung der Kolbenstange 32 mit Abstand voneinander mehrere Anschlüsse 99 für eine Aufhängevorrichtung 101, z.B. in Form einer Feder, jedenfalls aber längenveränderlich, vorgesehen, die zur Verbindung mit dem gefederten Teil des Anhängers dienen, der schematisch angedeutet und mit 103 gekennzeichnet ist.

Bei unbelastetem Anhänger wird der gefederte Teil 103 nach oben gedrückt und nimmt den Anschlag 91 mit, so daß beim Bremsvorgang nur eine entsprechend geringe Bremswirkung erzielt wird, wie dies anhand der Fig. 3 bereits näher erläutert wurde. Bei teilweise belastetem Anhänger senkt sich der Anschlag 91 soweit, daß der Anschlag 97 mit dem Kupplungsstück zusammenwirken kann und dadurch die Bremskraft zunimmt. Bei voll belastetem Anhänger wird der Anschlag 91 wirksam und damit die volle Bremskraft.

Um bei gebremstem Anhänger einen Ausgleich zu ermöglichen, wenn ein beladener Anhänger entladen wird, ist die Aufhängevorrichtung 101 längenveränderlich.

Wie man sieht, kann die von Hand einzustellende Vorwahlvorrichtung, die sich für ungefederte Anhänger eignet, und die Vorrichtung nach Fig. 14 wahlweise auf der Kolbenstange 32 angebracht werden, so daß die Nachstellvorrichtung je nach Art des Anhängers und Wunsch des Kunden ausgerüstet werden kann.

Zur Anpassung an unterschiedliche Federungseigenschaften der auszurüstenden Anhänger kann das längenveränderliche Element 101 an unterschiedlichen Anschlüssen 99 angeschlossen werden, wodurch sich eine Übersetzungswirkung erzielen läßt, d.h. bei langem Federweg wird man den näher an der Achse 89 gelegenen Anschluß wählen, bei kurzem Federweg dagegen einen entfernteren Anschluß, so daß jeweils die vertikale Bewegung des Anschlags 91, 97 in der Nachbarschaft des Kupplungsstücks 64 während der gesamten Durchfederung des Anhängers etwa gleich bleibt.

**Patentansprüche**

1. Hydraulische Anhängerbremse, insbesondere für schleppergezogene land- und forstwirtschaftliche Anhänger, mit einem einseitig wirkenden hydraulischen Bremszylinder (30), von dessen beiden relativ zueinander beweglichen Elementen (28, 32), dem Zylindergehäuse (28) und dem Kolben, ein erstes Element (28) an einem Bremsgestänge und das zweite Element (32) an einer ortsfesten Basis (12) am Anhänger angreift, und von welchen der Kolben durch den mittels eines Bremsventils abbaubaren Druck einer hydraulischen Druckquelle entgegen der Kraft einer Bremsfeder in seine Lösestellung bewegbar ist, dadurch gekennzeichnet, daß am ersten Element (28) ein erstes Sperrstück (52, 152, 252) einer einseitig wirkenden, mit mehreren in Richtung der Bewegungsbahn des ersten Elements aufeinanderfolgenden Sperrpositionen versehenen Sperrvorrichtung (52, 56; 152, 156; 252, 256) angeordnet ist, das in Richtung der beim Lösen der Bremse vom ersten Element ausgeführten Bewegung an einem zweiten, an der ortsfesten Basis (12) angeordneten Sperrstück (56, 156, 256) der Sperrvorrichtung abstützbar ist, daß die Sperrstücke (52, 56, 152, 156, 252, 256) sich in einer für den Übergang in die jeweils nächste Sperrposition geeigneten Übergabeposition befinden, wenn das erste Element von seiner Lösestellung einen dem minimalen Bremshub bei neuem Bremsbelag zuzüglich einer Hubverlängerung bei einer vorgegebenen Abnützung des Bremsbelags entsprechenden Abstand in Richtung auf seine Bremsstellung aufweist, daß in dieser Übergangsstellung zwischen dem zweiten Sperrstück (56, 156, 256) und dem ersten Element (28) in Richtung auf die Lösestellung des ersten Elements (28) ein Spiel besteht, welches etwa dem Bremshub bei neuem Bremsbelag entspricht, und daß das zweite Element (32) in Richtung der beim Bremsen auf dieses zweite Element (32) wirkenden Kraft der Bremsfeder (44) an der ortsfesten Basis (12) über ein einseitig wirkendes Kupplungselement (64, 164, 264, 364) abgestützt ist.

2. Anhängerbremse nach Anspruch 1, dadurch gekennzeichnet, daß das zweite Element (32) über eine Stützfeder (72) auf die ortsfeste Basis (12) abgestützt ist.

3. Anhängerbremse nach Anspruch 2, dadurch gekennzeichnet, daß die maximale Kraft der Stützfeder (72) einstellbar ist.

4. Anhängerbremse nach Anspruch 3, dadurch gekennzeichnet, daß die Stützfeder (72) zwischen dem zweiten Element (32) und dem einseitig wirkenden Kupplungselement (64) angeordnet ist und daß die Länge des die Stützfeder (72) belastenden Weges in Richtung der beim Bremsen auf das zweite Element (32) wirkenden Kraft der Bremsfeder (44) einstellbar ist.

5. Anhängerbremse nach Anspruch 4, dadurch gekennzeichnet, daß zur Begrenzung der Belastung der Stützfeder (72) an dem zweiten Element (32) und an dem Kupplungselement (64) miteinander zusammenwirkende Anschläge (66b, 88) vorgesehen sind, von welchen zumindest einer (88) abgestuft und gegenüber dem anderen Anschlag (66b) einstellbar ist.

6. Anhängerbremse nach einem der Ansprüche 2-5, dadurch gekennzeichnet, daß die minimale Kraft der Stützfeder (72) einstellbar ist.

7. Anhängerbremse nach Anspruch 5, dadurch gekennzeichnet, daß zur Einstellung des abgestuften Anschlags (88) eine einstellbare Vorwähleinrichtung (90, 94, 96, 98) vorgesehen ist, welche geeignet ist, bei von der Stellung des einstellbaren Anschlags (88a - 88c) abweichender Wahlstellung den einstellbaren Anschlag (88a - 88c) in Richtung auf die vorgewählte Stellung zu belasten.

8. Anhängerbremse nach einem der vorhergehenden Ansprüche, dadurch gekennzeichnet, daß sich das zweite Element (32) bis auf die vom Bremszylinder abgewandte Seite der ortsfesten Basis (12, 56) und des auf dieser Seite der ortsfesten Basis (12, 56) angeordneten, einseitig wirkenden Kupplungselements (64) erstreckt, daß das zweite Element (32) einen Anschlag (86) trägt, der in Richtung der von der Bremsfeder (44) ausgeübten Bremskraft an einem Anschlag (66b) am Kupplungselement (64) abstützbar ist.

9. Anhängerbremse nach Anspruch 8, dadurch gekennzeichnet, daß die Position des Anschlags (86) auf dem zweiten Element (32) in seiner Bewegungsrichtung einstellbar ist.

10. Anhängerbremse nach einem der Ansprüche 8 oder 9, dadurch gekennzeichnet, daß der Angriffspunkt der Stützfeder (72) am zweiten Element (32) in dessen Bewegungsrichtung einstellbar ist.

11. Anhängerbremse nach einem der Ansprüche 8-10, dadurch gekennzeichnet, daß der vom zweiten Element (32) getragene Anschlag (86) als Hülse ausgebildet ist, welche das zweite Element (32) und eine auf diesem angeordnete Stützfeder (72) umschließt und eine dem Kupplungselement (64) zugewandte, abgestufte Anschlagfläche (88) besitzt, daß die Hülse (86) drehbar auf dem zweiten Element (32) gelagert und in den Abstufungen (88a - 88c) der anschlagfläche zugeordneten Winkelpositionen positionierbar ist.

12. Anhängerbremse nach Anspruch 11, dadurch gekennzeichnet, daß ein Vorwählorgan (90) um die Drehachse der Hülse (86) drehbar gelagert und durch eine Rückstellkraft (92) in eine stabile Grundstellung bewegbar ist und daß das Vorwählorgan (90) lösbar mit der Hülse (86) verbindbar ist.

13. Anhängerbremse nach Anspruch 12, dadurchgekennzeichnet, das das Vorwählorgan (90) auf der Hülse (86) gelagert ist.

14. Anhängerbremse nach einem der Ansprüche 12 oder 13, dadurch gekennzeichnet, daß zur Erzeugung der Rückstellkraft das Vorwählorgan (90) exzentrisch durch ein Gewicht (92) belastet ist.

15. Anhängerbremse nach einem der Ansprüche 12 bis 14, dadurch gekennzeichnet, daß das Vorwählorgan (90) und die Hülse (86) durch eine Rastverbindung (94, 96) miteinander kuppelbar sind.

16. Anhängerbremse nach Anspruch 7 oder 12, dadurch gekennzeichnet, daß das Vorwählorgan (290) durch die Relativbewegung zwischen der mit der Achse (10) verbundenen festen Basis (12) und dem gegenüber der Achse (10) abgefederten Fahrzeugteil (211) über eine Stellverbindung (213) verstellbar ist und daß zwischen dem abgefederten Fahrzeugteil (211) und dem Vorwählorgan (290) oder dem Vorwählorgan (290) und dem einstellbaren Anschlag (88) ein aus einer Mittelstellung entgegen einer Rückstellkraft in entgegengesetzten Richtungen verstellbares Rückstellorgan angeordnet ist.

17. Anhängerbremse nach Anspruch 4, dadurch gekennzeichnet, daß an der vom Bremszylinder (30) abgewandten Seite des Kupplungselements (464) ein mit dem abgefederten Fahrzeugteil (411a, 411b) verbundener Anschlag (413) angeordnet ist, der vom zweiten Element (32) durchquert wird, daß an der vom Kupplungselement (464) abgewandten Seite des Anschlags (413) und einem auf dem zweiten Element (32) angeordneten Widerlager (474, 476) eine Stützfeder anliegt und daß die der Stützfeder (474) zugewandte Seite (466a, 466b) des Anschlags (413) in der Bewegungsrichtung des zweiten Elements (32) derart geneigt ist, daß diese Seite den geringsten Abstand vom Kupplungselement (464) aufweist, wenn der abgefederte Fahrzeugteil (411a, 411b) unbelastet ist und der Anschlag (413) seine obere Endstellung einnimmt.

18. Anhängerbremse nach Anspruch 1, dadurch gekennzeichnet, daß die Sperrvorrichtung als Rastengesperre (52, 56, 58, 252, 257) ausgebildet ist, wobei der Rastenhub der Hubverlängerung aufgrund einer vorgegebenen Abnützung des Bremsbelags entspricht.

19. Anhängerbremse nach Anspruch 18, dadurch gekennzeichnet, daß das erste Element (28) des Bremszylinders (30) mit einem eine Sägezahn-Verzahnung (152) aufweisenden, in Richtung der Bremszylinderachse verlaufenden Anker (150) versehen ist, welcher gegenüber einem einen Teil der ortsfesten Basis (12) bildenden Widerlager (156) verstellbar ist, wobei die Sperrflanken der Verzahnung (152) derart angeordnet sind, daß sie eine Bewegung des Ankers (150) entsprechend der Bewegung des ersten Elements (28) aus der Brems- in die Lösestellung blockieren.

20. Anhängerbremse nach Anspruch 18, dadurch gekennzeichnet, daß das erste Element (28) des Bremszylinders (30) mit einem in Richtung der Bremszylinderachse verlaufenden, einen Riegel (52) tragenden Anker (50) versehen ist, daß an der ortsfesten Basis (12) dem Riegel (52) eine schräg zur Bremszylinderachse in deren Richtung ansteigende, sich der Richtung der beim Bremsen auf das erste Element (28) ausgeübten Kraft der Bremsfeder (44) öffnende Rastkerben (58, 58', 58''. 58'') aufweisende Anschlagfläche (60) zugeordnet ist, wobei die Tiefe der Rastkerben (58, 58,, 58'', 58,'') der Hubverlängerung aufgrund einer vorgegebenen Abnützung des Bremsbelags entspricht.

21. Anhängerbremse nach Anspruch 1, dadurch gekennzeichnet, daß das Kupplungselement (64) einen Riegel (66a, 66b) trägt, dem sich entgegen der beim Bremsen auf das zweite Element (32) ausgeübten Kraft der Bremsfeder (44) öffnende Rastkerben (58'', 58,'') in einer Anschlagfläche (60) zugeordnet sind, die schräg zur Bremszylinderachse in der Richtung ansteigt, in der beim Bremsen die Kraft der Bremsfeder (44) auf das zweite Element (32) einwirkt, daß bei gelöster Bremse der Riegel in eine der Rastkerben (58'', 58''') auf eine Länge eindringt, die etwas geringer ist, als der in der Bewegungsrichtung des zweiten Elements (32) gemessene Abstand zweier aufeinanderfolgender Sperrpositionen der Sperrvorrichtung (52, 56, 152, 156, 252, 256), und daß auf dem zweiten Element (32) ein in Öffnungsrichtung der Rastkerben (58'', 58''') gegen das Kupplungselement (64) bewegbarer Mitnehmer (68) angeordnet ist, der in Lösestellung am Kupplungselement (64) anliegt.

22. Anhängerbremse nach den Ansprüchen 20 und 21, dadurch gekennzeichnet, daß der Sperrvorrichtung (52, 56, 58) und dem Kupplungselement (64) eine gemeinsame, Rastkerben (58, 58', 58'', 58'') aufweisende Anschlagfläche (60) zugeordnet ist.

23. Anhängerbremse nach Anspruch 1, dadurch gekennzeichnet, daß das Kupplungselement (264) an einer horizontalen, mit der Basis (12) verbundenen, parallel zur Bewegungsrichtung des zweiten Elements (32) verlaufenden, an ihrer Oberseite eine Sägezahn-Verzahnung (256) aufweisenden Schiene (257) längs dieser Schiene verstellbar aufgehängt ist und eine zum sperrenden Eingriff in diese Verzahnung (256) geeignetes, komplementäres Profil (237) besitzt.

24. Anhängerbremse nach Anspruch 23, dadurch gekennzeichnet, daß mit dem ersten Element (28) ein Anker (250) verbunden ist, welcher längs der Schiene (257) beweglich ist und mit einem zum sperrenden Eingriff in die Verzahnung (256) geeigneten komplementären Profil (252) versehen ist.

25. Anhängerbremse nach Anspruch 1, dadurch gekennzeichnet, daß das Kupplungselement als an der ortsfesten Basis (12, 156) gelagerte, mit einem Außengewinde (34) auf dem zweiten Element (32) in Eingriff stehende Mutter (164) ausgebildet ist, welche sich in Richtung der beim Bremsen von der Bremsfeder (44) auf das zweite Element (32) ausgeübten Bremskraft an der ortsfesten Basis (12, 156) abstützt, daß die von der ortsfesten Basis (12, 156) abgewandte Stirnfläche der Mutter (164) mit einer Sperrverzahnung (189) versehen ist, deren Sperrflanken (191) als Sperrelement eine in Bezug auf die Gewindeachse tangential angeordnete, in Sperrichtung und entgegen der Richtung der genannten Bremskraft bis zur Stelle einer Verbindung mit der ortsfesten Basis (12, 156) ansteigende Sperrfeder (195) zugeordnet ist, derart, daß beim Abheben der Mutter (164) von der Basis (12, 156) die Sperrfeder um ihre Verbindungsstelle mit der ortsfesten Basis (12, 156) verschwenkt und damit entgegen der Sperrichtung gegen die mit ihr zusammenwirkende Sperrflanke (191) eine tangentiale Kraft ausgeübt wird, welche in einem die Mutter (164) in Richtung der genannten Bremskraft auf dem zweiten Element (32) verstellenden Drehmoment resultiert.

26. Anhängerbremse nach Anspruch 25, dadurch gekennzeichnet, daß eine Hemmfeder (197) vorgesehen ist, welche der Sperrfeder entsprechend angeordnet ist, jedoch auf der Sperrverzahnung (189) aufliegt, wenn die Sperrfeder (195) in die Verzahnung (189) eingreift.

27. Anhängerbremse nach Anspruch 1, dadurch gekennzeichnet, daß als Kupplungselement ein an der ortsfesten Basis (12, 356) angebrachter Hydraulikzylinder (365) dient, in welchem ein mit einem Rückschlagventil (367) versehener, mit dem zweiten Element (32) verbundener Kolben (364) beweglich ist, der unter der Wirkung des Rückschlagventils (367) nur in der Richtung beweglich ist, die der Richtung der Kraft entgegengesetzt ist, die die Bremsfeder (44) beim Bremsen auf das zweite Element (32) ausübt.

28. Anhängerbremse nach Anspruch 22, dadurch gekennzeichnet, daß die Sperrvorrichtung (52, 56, 58) unter dem Kuppluhgselement (64) angeordnet und mit einer Auflage (53) für dieses versehen ist, an der das Kupplungselement (64) aufliegt, wenn sich Sperrvorrichtung und Kupplungselement in eingerastetem Zustand befinden und deren Länge so bemessen ist, daß das Kupplungselement (64) auch abgestützt wird, wenn es sich außerhalb der zugeordneten Rastkerbe (58, 58', 58'', 58''') befindet.

29. Anhängerbremse nach anspruch 5, dadurch gekennzeichnet, daß am zweiten Element (32) ein vertikal abgestufter Anschlag (91, 97) vertikal beweglich gelagert ist, der über ein längenveränderliches Element (101) mit dem abgefederten Teil des Anhängers verbindbar ist.

30. Anhängerbremse nach Anspruch 5, dadurch gekennzeichnet, daß der abgestufte Anschlag aus mindestens zwei zu Veränderung der Abstufung gegeneinander einstellbaren Teilen (91, 97) besteht.

31. Anhängerbremse nach Anspruch 29, dadurch gekennzeichnet, daß der abgestufte Anschlag (91, 97) um eine horizontale Achse verschwenkbar am zweiten Element gelagert und zur Anpassung an unterschiedliche Federungseigenschaften des Anhängers mit mehreren Aufhängepunkten (99) für das längenveränderliche Element (101) versehen ist, die unterschiedliche Abstände von der horizontalen Achse (89) aufweisen.

## Revendications

1. Frein de remorque hydraulique, en particulier pour des remorques tractées pour des exploitations agricoles et forestières, comportant un vérin de frein hydraulique (30) à un seul effet, ce vérin comprenant deux éléments (28, 52) mobiles l'un par rapport à l'autre, à savoir un corps de vérin (38) et un piston, un premier élément (28) étant accouplé à une barre de freinage (24) tandis que l'autre élément (32) est relié à une embase fixe (12) sur la remorque, le piston pouvant être déplacé dans sa position de desserrage de frein, à l'encontre de la force exercée par un ressort de frein, sous l'action d'une pression d'une source de liquide sous pression, par l'intermédiaire d'une vanne de frein, est caractérisé en ce que sur le premier élément (29) est disposé ur premier organe d'arrêt (52, 152, 252) d'un dispositif d'arrêt (52, 56; 152, 156; 252, 256) agissant d'un seul côté, pourvu de plusieurs positions d'arrêt disposées à la suite les unes des autres dans la direction dù mouvement du premier élément, ce premier élément venant prendre appui, dans la direction du mouvement du premier élément correspondant au desserrage du frein, sur un second organe d'arrêt (56, 156, 256) du dispositif d'arrêt qui est disposé sur l'embase fixe (12), en ce que les organes d'arrêt (52, 56, 152, 156, 252, 256) se trouvent dans une position de transfert appropriée pour le passage à la position d'arrêt immédiatement suivante lorsque le premier élément est situé, dans la direction de sa position de serrage du frein à une distance, à partir de sa position de desserrage, correspondant à la course minimale du frein avec une garniture de frein neuve augmentée de l'allongement de la course résultant d'une usure prédéterminée de la garniture de frein, en ce que dans cette position de transfert il existe, entre le second organe d'arrêt (56, 156, 256) et le premier élément (28), dans la direction de la position de desserrage du premier élément (28), un jeu qui correspond sensiblement à la course du frein avec une garniture de frein neuve, et en ce que le second élément (32) prend appui, dans la direction de la force du ressort de frein (44) qui s'exerce sur ce second élément lors d'une opération de freinage, sur l'embase fixe (12), par l'intermédiaire d'un organe de couplage agissant d'un seul côté (64, 164, 264, 364).

2.- Frein de remorque suivant la revendication 1 caractérisé en ce que le second élément (32) prend appui sur l'embase fixe (12) par l'intermédiaire d'un ressort d'appui (72).

3.- Frein de remorque suivant la revendication 2 caractérisé en ce que la force maximale du ressort d'appui (72) est réglable.

4.- Frein de remorque suivant la revendication 3 caractérisé en ce que le ressort d'appui (72) est disposé entre le second élément (32) et l'organe de couplage (64) agissint d'un seul côté et la longueur de l'extérieur assurant la charge du ressort d'appui (72), dans la direction de la force du ressort de frein (44) agissant, lors du freinage, sur le second élément (32), est réglable.

5.- Frein de remorque suivant la revendication 4 caractérisé en ce que pour limiter la charge du ressort d'appui (72) sur le second élément (32) et l'organe d'accouplement (64) sont prévues des butées (66b, 88) coopérant entre elles, butées parmi lesquelles l'une au moins (88) est étagée et peut être réglée par rapport à l'autre butée (66b).

6.- Frein de remorque suivant l'une quelconque des revendications 2 à 5 caractérisé en ce que li force minimale du ressort d'appui (72) est réglable.

7.- Frein de remorque suivant la revendication 5 caractérisé en ce que pour le réglage de la butée étagée (88) il est prévu un dispositif de présélection réglable (90, 94, 96, 98) qui permet, par un réglage sélectionné différent de la mise en position de la butée réglable (88a-88c) de solliciter la butée réglable (88a-88c) en direction de la position présélectionnée.

8.- Frein de remorque suivant l'une quelconque des revendications précédentes caractérisé en ce que le second élément (32) s'étend jusqu'au côté opposé au vérin de frein, de l'embase fixe (12, 56) et de l'organe de couplage (64) agissant d'un seul côté disposé du côté précité de l'embise fixe (12, 56) et le second élément (32) porte une butée (86) qui peut venir prendre appui, dans la direction de la force de freinage exercée par le ressort de frein (44), contre une butée (66b) prévue sur l'organe de couplage (64).

9.- Frein de remorque suivint la revendication 8 caractérisé en ce que la position de la butée (86) sur le second élément (32) est réglable dans la direction de son déplacement.

10.- Frein de remorque suivant l'une quelconque des revendications 8 ou 9 caractérisé en ce que le point d'appui du ressort (72) sur le second élément (32) est réglable dans la direction du mouvement de celui-ci.

11.- Frein de remorque suivant l'une quelconque des revendications 8 à 10 caractérisé en ce que la butée (86) portée par le second élément (32) est réalisé sous la forme d'un manchon qui entoure le second élément (32) et un ressort d'appui (72) disposé sur celui-ci, et qui présente une surface de butée étagée (88) tournée vers l'organe de couplage (64), en ce que le manchon (86) est monté à rotation sur ce second élément (32) et il peut être placé dans des positions angulaires correspondant aux étages (88a-88c) de la surface de butée.

12.- Frein de remorque suivant la revendication 11 caractérisé en ce qu'un orgine de présélection (90) est monté à rotation autour de l'axe de rotation du manchon (86), il peut être déplacé, par une force de rappel (92), dans une position de base stable, et l'organe de présélection (90) peut être relié d'une manière libérible au manchon (86).

13.- Frein de remorque suivant la revendicition 12 caractérisé en ce que l'organe de présélection (90) est monté sur le manchon (86).

14.- Frein de remorque suivant l'une quelconque des revendications 12 ou 13 caractérisé en ce que pour la créition de la force de rappel l'organe de présélection (90) est chargé d'une manière excentrée par un poids (92).

15.- Frein de remorque suivant l'une quelconque des revendications 12 à 14 caractérisé en ce que l'orgine de présélection (90) et le manchon (86) peuvent être accouplés l'un à l'autre par un dispositif à encliquetage (94, 96).

16.- Frein de remorque suivant l'une quelconque des revendications 7 ou 12 caractérisé en ce que l'prgane de présélection (290) peut être réglé par le mouvement relatif entre l'embase fixe (12) liée à l'essieu (19) et la partie (211) du véhicule suspendue par rapport à l'essieu (10) par l'intermédiaire d'un organe de liaison de réglage (213), en en ce qu'entre la partie suspendue (211) du véhicule et l'organe de présélection (290) ou bien entre cet organe de présélection (290) et la butée réglable (88) est disposé un organe de rappel réglable à partir d'une position médiane à l'encontre d'une force de rappel dans des directions opposées.

17.- Frein de remorque suivant la revendication 4 caractérisé en ce que du côté de l'organe de couplage (464) qui est opposé au cylindre de frein (30) est disposée une butée (413) solidaire de la partie suspendue (411a, 411b) du véhicule, cette butée étant traversée par le second élément (32), un ressort de sollicitation (472) est en appui entre le côté de la butée (413) qui est opposé à l'organe de couplage (464) et une butée (474, 476) solidaire du second élément (32) et le côté (466a, 466b) de la butée (413) qui est tourné vers le ressort de sollicitation (474) est incliné par rapport à la direction du mouvement du second élément (32), de telle façon que ce côté soit à la plus petite distance de l'organe d'accouplement (464) lorsque la partie suspendue (411a, 411b) du véhicule n'est pas chargée et que la butée (413) prend sa position extrême supérieure.

18.- Frein de remorque suivant la revendication 1 caractérisé en ce que le dispositif d'arrêt est constitué pir un dispositif d'arrêt à encoches (52, 56, 58, 252, 257) dans lequel le décalage des encoches correspond à l'allongement de la course du frein dû à une usure prédéterminée de la garniture de frein.

19.- Frein de remorque suivant la revendication 18 caractérisé en ce que le premier élément (28) du vérin de frein (30) est pourvu d'un tirant (150) s'étendant dans la direction de l'axe du vérin de frein et présentant une denture (152) en dents de scie, ce tirant pouvant être réglé par rapport à une platine de butée (156) constituant une partie de l'embase fixe (12), et les flancs d'arrêt de la denture (152) sont disposés de telle façon qu'ils bloquent un mouvement du tirant (150) correspondant au mouvement du premier élément (28) de la position de freinage à la position de desserrage du frein.

20.- Frein de remorque suivant la revendication 18 caractérisé en ce que le premier élément (28) du vérin de frein (30) est pourvu d'un tirant (50) s'étendant dans la direction de l'axe du vérin de frein et portant un bloc d'arrêt (52), et en ce qu'une surface de butée (60) est prévue sur l'embase fixe (12) pour le bloc d'arrêt (52), cette surface de butée présentant une succession d'encoches ouvertes (58, 58', 58', 58'') inclinée, par rapport à l'axe du vérin de frein, de bas en haut dans la direction de la force du ressort de frein (44) s'exerçant sur le premier élément (28) lors d'une opération de freinage, la profondeur des encoches (58, 58', 58'', 58''') correspondant à l'allongement de la course résultant d'une usure prédéterminée de la garniture de frein.

21.- Frein de remorque suivant la revendication 1 caractérisé en ce que l'organe d'accouplement (64) porte une saillie d'arrêt (66a, 66b) vers laquelle sont tournées des encoches ouvertes (58'',58''') prévues dans une surface de butée (60), en sens opposé de la force du ressort de frein (44) exercée, lors d'une opération de freinage, sur le second élément (32), cette surface de butée (60) étant inclinée de bas en haut, par rapport à l'axe du vérin de frein, dans la direction dans laquelle, lors d'une opération de freinage, la force du ressort de frein (44) s'exerce sur le second élément (32), en ce que, lorsque le frein est desserré, la saillie d'arrêt pénètre dans l'une des encoches (58'', 58''') d'une longueur qui est un peu plus petite que la distance, mesurée dans la direction du déplacement du second élément (32), entre deux positions d'arrêt successives du dispositif d'arrêt (52, 56, 152, 156, 252, 256), et en ce que sur le second élément (32) est disposé un orgine d'entraînement (68) pouvant être déplacé contre l'organe d'accouplement (64) dans la direction d'ouverture des encoches (58'', 58'''), cet organe d'entraînement (68) étant en appui contre l'orgine d'accouplement (64) en position de desserrage du frein.

22.- Frein de remorque suivant l'une quelconque des revendications 20 et 21 caractérisé en ce qu'une surface de butée commune (60), présentant des encoches (58, 58', 58'', 58''') est prévue pour le dispositif d'arrêt (52, 56, 58) et l'organe d'accouplement (64).

23.- Frein de remorque suivant la revendication 1 caractérisé en ce que l'organe d'accouplement (264) est suspendu d'une manière réglable le long d'un rail horizontal (257), solidaire de l'embase (12), parallèle à la direction du déplacement du second élément (32) et présentant, sur sa face supérieure, une denture (256) en dents de scie et cet organe d'accouplement (264) présente un profil complémentaire (257) destiné à s'engager et à se bloquer dans la denture (256).

24.- Frein de remorque suivant la revendication 23 caractérisé en ce que le premier élément (28) est solidaire d'un tirant (250) qui est mobile le long du rail (257) et qui est pourvu d'un profil complémentaire approprié (252) destiné à venir en prise et se bloquer dans la denture (256).

25.- Frein de remorque suivant la revendication 1 caractérisé en ce que l'organe d'accouplement est réalisé sous la forme d'un écrou (164) monté sur l'embase fixe (12, 156) et en prise avec un filetage externe (34) prévu sur le second élément (32), cet écrou (164) prenant appui sur l'embase fixe (12, 156) dans la direction de la force de freinage exercée par le ressort de frein (44), lors d'une opération de freinage, sur le second élément (32), en ce que la face frontale de l'écrou (164) qui est opposée à l'embase fixe (12, 156), est pourvue d'une denture de blocage (189) dont les flancs d'arrêt (191) jouent le rôle d'élément d'arrêt pour un ressort de blocaqe (195) disposé tanqentiellement par rapport à l'axe du filetage et s'élevant en étant incliné dans la direction d'arrêt, à l'opposé de la direction de la force de freinage précitée, jusqu'à la position de fixation sur l'embase fixe (12, 156), et ce de telle façon que lors de l'écartement de l'écrou (164) de l'embase (12, 156) le ressort de blocage pivote autour de son point de fixation sur l'embase fixe (12, 156) et exerce par conséquent contre le flanc d'arrêt (191) coopérant avec lui, dans la direction opposée à la direction de blocage, une force tangentielle qui se traduit par un moment de rotation assurant le réglage de l'écrou (164), dans la direction de la force de freinage précitée, sur le second élément (32).

26.- Frein de remorque suivant la revendication 25 caractérisé en ce qu'il est prévu un ressort d'arrêt (197) qui est disposé de la même manière que le ressort de blocage (195) mais qui se trouve toutefois en appui sur la denture de blocage (189) lorsque le ressort de blocage (195) est engagé dans la denture (189).

27.- Frein de remorque suivant la revendication 1 caractérisé en ce que l'organe d'accouplement est constitué par un vérin hydraulique (365) monté sur l'embase (12, 356), dans lequel est mobile un piston (364) pourvu d'un clapet anti-retour (367) et qui est relié au second élément (32), ce piston étant mobile, par suite de la présence du clapet anti-retour (367), uniquement dans la direction qui est opposée à la direction de la force que le ressort de frein (44) exerce sur le second élément (32) lors d'une opération de freinage.

28.- Frein de remorque suivant la revendication 22 caractérisé en ce que le dispositif d'arrêt (52, 56, 59) est disposé sous l'organe d'accouplement (64) et il est pourvu d'une cale d'appui (53) pour ce dernier, cale sur laquelle prend appui l'organe d'accouplement (64) lorsque le dispositif d'arrêt et l'organe d'accouplement se trouvent à l'état d'engagement mutuel, la longueur de la cale étant déterminée de telle façon que l'organe d'accouplement (64) soit également en appui sur elle lorsqu'il se trouve en dehors de l'encoche correspondante (58, 58', 58'', 58''').

29.- Frein de remorque suivant la revendication 5 caractérisé en ce qu'une butée (91, 97) étagée dans le sens verticil et mobile verticalement est montée sur le second élément (32), cette butée pouvant être reliée à la partie suspendue de la remorque par l'intermédiaire d'un élément (101) à longueur variable.

30.- Frein de remorque suivant la revendication 29 caractérisé en ce que la butée étagée est constituée d'au moins deux parties (91, 97) réglables l'une par rapport à l'autre afin de modifier l'étendue de l'étage.

31.- Frein de remorque suivant la revendication 29 caractérisé en ce que la butée étagée (91, 97) est montée à pivotement autour d'un axe horizontil sur le second élément et elle est pourvue, en vue de son adaptation à des caractéristiques de suspension différentes de la remorque, de plusieurs points de suspension (99) pour l'élément à longueur variable (101), ces points se trouvant à des distances différentes de l'axe horizontal (89).

## Claims

1 A hydraulic trailer brake, more especially for agricultural or forestry trailers pulled by a tractor, comprising a single acting hydraulic brake cylinder (30), of whose two relatively moving elements (25 and 32), the cylinder tube (28) and the piston, a first element (28) acts on a brake linkage (24) and the second element (32) acts on a stationary base (12) on the trailer, and of which the piston is moved by a pressure able to be released through a brake valve and produced by a hydraulic pressure supply, against the force of a braking spring into a release position, characterized in that a first locking member (52, 152 and 252) of a single acting locking device (52, 56; 152, 156; 252 and 256), having a number of locking positions succeeding each other in the direction of the path of motion of the first element, is placed on the first element (28), said first locking member (52, 152 and 252) being able to be supported in the direction of the motion, occurring on brake release, of the first element, on a second locking member (58, 158 and 258) of the locking device placed on the stationary hase (12), in that the locking members (52, 58, 152, 158, 252 and 258) are in positions for the transition into the respective next locking positions, when the first element is spaced a distance from its release position equal to the minimum hrake stroke with a new brake lining with the addition of a stroke elongation at a given degree of wear of the brake lining towards it brake position, in that in this transition position between the second locking member (56, 156 and 256) and the first element (28) towards the release position of the first element (28) there is a degree of play, which is approximately equal to the brake stroke when the brake lining is new, and in that the second element (32) is supported in the direction of the force of the brake spring (44) acting on this second element (32) during braking on the stationary base (12) by way of a coupling element (64, 164, 264 and 364) acting in a single direction.

2 The trailer brake as claimed in claim 1 characterized in that the second element (32) is supported on the stationary base (12) by a support spring (72).

3 The trailer brake as claimed in claim 2 characterized in that the maximum force of the support spring (72) may be adjusted.

4 The trailer brake as claimed in claim 3 characterized in that the support spring (72) is placed between the second element (32) and the single acting coupling element (64) and in that the length of the load displacement on the support spring (72) in the direction of the force, acting during braking on the second element (32), of the braking spring (44) may be adjusted.

5 The trailer brake as claimed in claim 4 characterized in that for limiting the load of the support spring (72) on the second element (32) and on the coupling element (64) there are cooperating abutments (68b and 88), of which at least one (88) is stepped and able to be adjusted in relation to the other abutment (66b).

6 The trailer brake as claimed in any one of claims 2 to 5 characterized in that the minimum force of the support spring (72) is adjustable.

7 The trailer brake as claimed in claim 5 characterized in that for adjustment of the stepped abutment (88) there is an adjustable preselecting device (90, 94, 96 and 88) which is adapted to urge the adjustable abutment (88a to 88c) towards the preselected position if the preselected position differs from the position of the adjustable abutment (88a to (88c).

8 The trailer brake as claimed in any one of the preceding claims characterized in that the second element (32) extends as far as the side, remote from the brake cylinder, of the stationary base (12 and 58) and of the single acting coupling element (84) placed on this side of the stationary base (12 and 56), and in that the second element (32) carries an abutment (86), which may be supported by the braking force, exerted by the brake spring (44) on an abutment (68b) on the coupling element (64).

9 The trailer brake as claimed in claim 8 characterized in that the position of the abutment (86) of the second element (32) is able to be adjusted in its direction of motion.

10 The trailer brake as claimed in claim 8 or claim 9 characterized in that the point of action of the support spring (72) on the second element (32) is able to be adjusted in the direction of motion thereof.

11 The trailer brake as claimed in any one of claims 8 to 10 characterized in that the abutment (86) carried by the second element (32) is in the form of a sleeve, which surrounds the second element (32) and a support spring (72) placed thereon, and possesses a stepped abutment face (88) facing the coupling element (64), in that the sleeve (86) is rotatably mounted on the second element (32) and may be positioned at different angles coordinated with the steps (88a to 88c) of the abutment face.

12 The trailer brake as claimed in claim 11

characterized in that a preselecting member (90) is mounted for rotation about the axis of turning of the sleeve (86) and may be moved by a restoring force (92) into a stable basic position and in that the preselecting member (90) is able to be disconnectably joined with the sleeve (86).

13 The trailer brake as claimed in claim 12 characterized in that the preselecting member (90) is bearinged on the sleeve (86).

14 The trailer brake as claimed in claim 12 or claim 13 characterized in that for producing the restoring force the preselecting member (90) is loaded eccentrically by a weight (92).

15 The trailer brake as claimed in any one of claims 12 to 14 characterized in that the preselecting member (90) and the sleeve (86) are able to be coupled by a detent connection (94 and 96).

16 The trailer brake as claimed in claim 7 or claim 12 characterized in that the preselecting member (290) is able to be adjusted by the relative motion between the base (12), fixedly joined to the axle (10) and the vehicle part (211) suspended in relation to the axle (10) by way of a setting connection (213) and in that between the suspended vehicle part (211) and the preselecting member (290) or the preselecting part (290) and the adjustable abutment (88) there is a restoring member able to be moved out of a center position against a restoring force in opposite directions.

17 The trailer brake as claimed in claim 4 characterized in that on the side, remote from the brake cylinder (30) of the coupling element (464) an abutment (413) is placed which is joined with the suspended vehicle part (411a and 411b) and which has the second element (32) extending through it, in that on the side, remote from the coupling element (464), of the abutment (413) and a counter-abutment (74 and 476) placed on the second element (32) there is a support spring engaging the said side and in that the side (468a and 486b), facing the support spring (474), of the abutment (413) is so inclined in the direction of motion of the second element (32) that this side has the least distance from the coupling element (464), when the suspended vehicle part (411a and 411b) is unloaded and the abutment (413) assumes its upper end position.

18 The trailer brake as claimed in claim 1 characterized in that the locking device is designed as a ratchet (52, 56, 58, 252 and 257), the stroke of the ratchet equalling the extension of the stroke owing to a given degree of wear of the brake lining.

19 The trailer as claimed in claim 18 characterized in that the first element (28) of the brake cylinder (30) has a dog (150) with saw teeth (152) and extending in the direction of the brake cylinder, said dog being able to be adjusted in relation to a part of the counter-abutment (156) forming a part of the stationary base (12), and the lccking flanks of the teeth (152) are so arranged that they block a movement of the dog (150) corresponding to a movement of the first element (28) out of the braking into the release position.

20 The trailer brake as claimed in claim 18 characterized in that the first element (28) of the brake cylinder (30) is provided with a dog (50) extending in the direction of the brake cylinder axis and carrying a bolt (52), in that on the stationary base (12) there is an abutment face (60) which rises obliquely in relation to the brake cylinder axis and towards same, said face (60) having ratchet notches (58, 58''', 58'' and 58'''') opening in the direction of the force, exerted on braking against the first element (28) of the braking spring (44), for the bolt (52), the depth of the ratchet notches (58, 58', 58'' and 58''') being equal to the extension of the stroke due to a given degree of wear of the brake lining.

21 The trailer brake as claimed in claim 1 characterized in that the coupling element (84) carries a bolt (88a and 68a), for which there are ratchet notches (58'' and 58''') opening against the force, exerted on braking on the second element (32) of the brake spring (44) in an abutment face, such abutment face (60) rising obliquely towards the brake cylinder axis in that direction which on braking the force of the brake spring (44) acts on the second element (32), in that when the brake is taken off the bolt goes into one of the ratchet notches (68'' and 68''') for a distance, which is somewhat less than the distance, as measured in the direction of motion of the second element (32), between two succeeding locking positions of the lccking device (52, 58, 152, 156, 252, 256) and in that on the second element (32) there is a movable driving catch (68) able to be moved in the opening direction of the ratchet notches (58'' and 58'') towards the coupling element (64), such catch resting on the coupling element (84) in the release position.

22 The trailer brake as claimed in claims 20 and 21 characterized in that the locking device (52, 56, 58) and the coupling element (64) have a common abutment face (60) with ratchet notches (58, 58', 58'', 58''').

23 The trailer brake as claimed in claim 1 characterized in that the coupling element (264) is connected with a horizontal rail (257) so as to be able to be adjusted along the length thereof, said rail being connected with the base (12), running parallel to the direction of motion of the second element (32) and having saw teeth (256) on its upper side, and the element (284) has a form (237) which is complementary to such teeth (256) and may make a locking connection therewith.

24 The trailer brake as claimed in claim 23 characterized in that a dog (250) is connected with the first element (28) and may be moved along the rail (257) and has a suitable complementary form (252) for making a locking engagement with the teeth (258).

25 The trailer brake as claimed in claim 1 characterized in that the coupling element is in the form of a nut (164) bearinged on the stationary base (12 and 156) and in engagement with a male thread (34) on the second element (32), such nut being supported during braking by the braking force, exerted by the braking spring (44) on the second element (32) on the stationary base (12 and 156), in that the end face, turned away from the stationary base (12 and 156), of the nut (164) has locking teeth (189), whose locking flanks (191) as a locking element have a locking spring (195) that is arranged tangentially in relation to the thread axis and rise in the locking direction and opposite to the direction of the said braking force as far as a point of connection with the stationary base (12 and 156) in such a way that on lifting the nut (184) clear of the base (12 and 158) the locking spring is tilted about its point of connection with the stationary base (12 and 156) and therefore, against the locking direction towards the locking flank (191) cooperating therewith, a tangential force is exerted, which results in a torque setting the nut (184) in the direction of the said torque on the second element (32).

26 The trailer brake as claimed in claim 25 characterized in that a retarding spring (197) is present which is arranged in a manner like the locking spring but rests on the locking teeth (189) when the locking spring (195) engages the teeth (189).

27 The trailer brake as claimed in claim 1 characterized in that the coupling element is in the fotm of a hydraulic cylinder (365) mounted on the stationary base (12 and 358) and in the cylinder (265) there is a piston (364) provided with a check valve (367) and connected with the second element (32), such piston, because of the action of the check valve (367), only being able to be moved in the direction opposite to the direction of the force exerted by the brake spring (44) on the second element (32) during braking.

28 The trailer brake as claimed in claim 22 characterized in that the locking device (52, 56 and 58) is placed under the coupling element (64) and is provided with a support pad (53) therefor, on which the coupling element (54) rests when the locking device and the coupling element are in the engaged state and the length thereof is so dimensioned that the coupling element (64) is also supported, when it is clear of the appropriate rachet notch (58, 58', 58" and 58"').

29 The trailer brake as claimed in claim 5 characterized in that on the second element (32) a vertically stepped abutment (91 and 97) is mounted for vertical motion and may be connected by a telescoping element (101) with the suspended part of the trailer.

30 The trailer brake as claimed in claim 5 characterized in that the stepped abutment is made up of at least two parts (91 and 96) that may be set in relation to each other for adjustment of the step.

31 The trailer brake as claimed in claim 29 characterized in that the stepped abutment (91 and 97) is mounted for horizontal pivoting on the second element and for adaptation to different suspension characteristics of the trailer is provided with a plurality of suspension points (99) for the longitudinally adjustable element (101), which are at different distances from the horizontal pin (89).

FIG.1

FIG.2

FIG.5

1

# FIG.3

FIG.4

FIG. 6

157
150
156
152

VII

189  188
164
32
195

FIG. 7

193
195
191
VIII
197
199

FIG. 8

193
195  189
197
199

32

FIG.9

FIG.10

FIG.11

X →

FIG.12

FIG.13

0 094 689

FIG.14